# EUROPEAN PATENT SPECIFICATION

(11) **EP 4 124 522 B1**
(45) Date of publication and mention of the grant of the patent: **03.09.2025**
(21) Application number: 21315130.1
(22) Date of filing: 28.07.2021
(51) Int. Cl.: B60S 1/48, B60S 1/56

(54) **FLUID DISTRIBUTION ASSEMBLY FOR THE CLEANING OF A SENSOR OF A VEHICLE**
FLÜSSIGKEITSVERTEILUNGSANORDNUNG ZUR REINIGUNG EINES SENSORS EINES FAHRZEUGES
ENSEMBLE DE DISTRIBUTION DE FLUIDE POUR LE NETTOYAGE D'UN CAPTEUR D'UN VÉHICULE

(43) Date of publication of application: 01.02.2023
(73) Proprietor: A. Raymond et Cie, 38000 Grenoble (FR)
(72) Inventor: FRIEDL, Julien, 68640 Waldighoffen (FR)
(74) Representative: IP Trust

(56) References cited:
- EP-A1- 3 647 133
- WO-A1-2018/188823
- WO-A1-2020/003875
- WO-A1-2020/006320
- US-A1- 2020 361 421
- US-A1- 2021 146 406

## Description

### FIELD OF THE INVENTION

The present invention relates to the vehicle cleaning assembly and the cleaning method thereof. In particular, the present invention concerns a fluid distribution assembly configured for cleaning at least one sensor of an automotive vehicle and in particular an autonomous vehicle.

Notably, the present invention aims at proposing a fluid distribution assembly for which fluid consumption is optimized and notably reduced.

### DESCRIPTION OF THE RELATED ART

Automotive vehicles are now equipped with many sensors, cameras, lidars or radars (hereinafter "sensors") for driving assistance purposes. These sensors may be located inside or outside the vehicle in order to offer the driver a complete visibility of the environment in which the vehicle is located. For example, sensors may be located in the bumper, in the side-skirt, on the side mirror, behind the windshield, under the hood, nearby the headlamps, on a roof pod.

However, these sensors, exposed to the environment, are likely to be covered with dirt or dust, and consequently may encounter performance degradations. Frequent cleanings of these sensors is therefore required to guarantee their performances.

In this respect, automotive vehicles may be provided with a cleaning system equipped in particular with cleaning fluid distribution ducts and nozzles. The nozzles are notably arranged at the ends of the fluid distribution ducts and in close proximity of the sensors. According to this arrangement, it is possible to dispense a cleaning fluid on the surface of each of the sensors and thus remove traces of dust or dirt.

To this regard, fluid distribution systems known from the prior are disclosed in documents US 2020/361421, WO2018188823 and WO2019029915. Such fluid distribution systems are arranged for the cleaning of surface sensors disposed all around the perimeter of the automotive vehicle.

However, such fluid distribution system may not be optimum in terms of fluid consumption.

Indeed, the number of sensors keeps growing, especially for autonomous vehicles, which may impose huge consumption of cleaning fluids and the implementation of very large cleaning fluid reservoir within the automotive vehicle.

Furthermore, and notably in the case of autonomous vehicles, frequent sensor cleanings may be required to limit the downtime of sensors, and to meet the safety requirements associated with the driving of an autonomous vehicle.

It is therefore of paramount to limit the consumption of cleaning fluid during cleaning operation of the fluid distribution system.

One purpose of the present invention is to propose a fluid distribution assembly for the cleaning of sensors configured for limiting the cleaning fluid consumption.

Another purpose of the present invention is also to propose a fluid distribution assembly for the cleaning of sensors which permit to limit the cleaning duration of surface sensors.

### SUMMARY OF THE INVENTION

The above purposes of the present invention are, at least partially, achieved by a fluid distribution assembly for the cleaning of a sensor of a vehicle, the assembly comprising :
- at least one flow control valve provided with an actuator which, when not energized, imposes one of an open state and a close state to the at least one control valve, and when energized imposes the other of the open state and the close state;
- supply means for supplying a cleaning fluid to the inlet of the at least one flow control valve at a pressure higher than a predetermined pressure;
- at least one outlet conduit comprising an inner diameter in 3 mm to 10 mm range, and a length below 50 cm, advantageously below 35 cm, more advantageously below 10.cm;
- at least one nozzle connected to an outlet of the at least one flow control valve by means of the at least outlet conduit and intended to spray a cleaning fluid on a sensor to be cleaned when the at least one flow control valve is in the open state.

According to one embodiment, the fluid distribution assembly further comprises control means for controlling the actuator and the supply means;
the control means being configured, when activated, to command the execution of at least one cleaning sequence of an initiation step and a termination step,
   - the initiation step comprising the control of the actuator so that it imposes the open state to the least one control valve, and the supply of the cleaning fluid by the supply means;
   - the termination step comprises the control of the actuator to impose a close state to the at least one flow control valve;
the initiation step and the termination step being spaced apart by a duration of less than a predetermined duration.

According to one embodiment, the control means are configured to command the execution of n successive cleaning sequences, n being an integer, and n being chosen so that the ratio of the volume of the cleaning fluid sprayed over a surface on which the cleaning fluid is sprayed is below 3 mL/cm², advantageously below 2 mL/cm², more advantageously below 1 mL/cm².

According to the invention, the at least one outlet conduit is configured to impose a pressure drop below 1%.

According to one embodiment, the supply means comprise a tank for storing the cleaning fluid, and at least one intermediate conduit connecting the tank and the at least one flow control valve.

According to one embodiment, the tank is configured to maintain the cleaning fluid in the 1 bar to 15 bar pressure range, advantageously in the 2 bar to 15 bar pressure range, more advantageously in the 2 bar to 8 bar pressure range.

According to one embodiment, said fluid distribution assembly further comprises a pump interposed between the tank and the at least one flow valve, the pump being configured to inject the cleaning fluid, from the tank, in the at least one flow control valve at a pressure comprised in the 1 bar to 15 bar pressure range, advantageously in the 2 bar to 15 bar pressure range, more advantageously in the 2 bar to 8 bar pressure range.

According to one embodiment, the at least one intermediate conduit comprises a corrugated conduit or a smooth conduit.

According to one embodiment, the at least one outlet conduit comprises a corrugated conduit or a smooth conduit.

According to one embodiment, the at least one nozzle is a jet nozzle, a telescopic nozzle, or an oscillating nozzle.

The invention also concerns an automotive vehicle which comprises at least one sensor, the fluid distribution assembly according to the present invention, the at least one nozzle being arranged on the perimeter of the automotive vehicle and configured to spray the cleaning fluid onto the at least one sensor.

The invention also concerns a method for cleaning a sensor of an automotive vehicle by means of a fluid distribution assembly mounted in said automotive vehicle which comprises:
the method comprising the execution of at least one cleaning sequence of an initiation step and a termination step,
   - the initiation step comprising the control of the actuator so that it imposes the open state to the at least one control valve, and the supply of the cleaning fluid by the supply means;
   - the termination step comprises the control of the actuator to impose a close state to the at least one flow control valve;
the initiation step and the termination step being spaced apart by a duration of less than a predetermined duration.

According to one embodiment, the fluid distribution assembly further comprises control means for controlling the actuator and the supply means, so that the execution of the at least one cleaning sequence is commanded by the control means.

According to one embodiment, the method comprises the execution of n successive cleaning sequences, n being an integer, and n being chosen so that the ratio of the volume of the cleaning fluid sprayed over the surface on which the cleaning fluid is sprayed is below 3 mL/cm², advantageously below 2 mL/cm², more advantageously below 1 mL/cm².

According to one embodiment, the predetermined pressure in the 1 bar to 15 bar pressure range, advantageously in the 2 bar to 15 bar pressure range, more advantageously in the 2 bar to 8 bar pressure range.

According to one embodiment, supply means comprise a tank storing the cleaning fluid, the tank being located in the automotive vehicle and connected to an inlet of the at least one flow control valve by means of an intermediate conduit.

According to one embodiment, the tank maintains the cleaning fluid at a first pressure, the first pressure being adapted so that the cleaning fluid supplied to the at least one flow control valve is at a pressure higher than the predetermined pressure.

According to one embodiment, a pump is interposed between the tank and the at least one control valve, the method comprises the activation of the pump for supplying the cleaning fluid to the inlet of the at least one flow control valve at a pressure above the predetermined pressure.

### DESCRIPTION OF THE DRAWINGS

Other features and advantages will be better understood after reading the following description of the fluid distribution assembly for the cleaning of surface sensor of a vehicle according to the invention, provided as non-limiting examples only, with reference to the accompanying drawings in which:
Fig. 1 is a schematical representation of a fluid distribution assembly according to a first embodiment of the present invention;
Fig. 2 is a schematical representation of a fluid distribution assembly according to a second embodiment of the present invention;
Fig. 3 is a schematical representation of an automotive vehicle provided with at least one sensor and the fluid distribution assembly according to the present invention;
Fig. 4 is a graphical representation of the pressure (vertical axis, in arbitrary units) at the nozzle of the first assembly (curve A) and of the second assembly (curve B) as a function of time (horizontal axis, in arbitrary units);
Fig. 5 is another graphical representation of the pressure (vertical axis, in arbitrary units) at the nozzle of the first assembly (curve A) and of the second assembly (curve B) as a function of time (horizontal axis, in arbitrary units).

### DETAILED DESCRIPTION OF THE INVENTION

In the descriptive part, the same references in the drawings may be used for elements of the same type. The drawings are schematic representations which, for the sake of readability, are not necessarily to scale.

The present invention concerns a fluid distribution assembly for the cleaning of sensors, cameras, lidars or radars (hereafter "sensors"), notably for the cleaning of sensors of an automotive vehicle.

Notably the fluid distribution assembly of the present invention comprises:
- at least one flow control valve provided with an actuator which, when energized, imposes one of a close state and an open state to the at least one flow control valve, and the other of the close state and the open state when the actuator is not energized; .
- supply means for supplying a cleaning fluid to the inlet of the at least one flow control valve at a pressure higher than a predetermined pressure;
- at least one outlet conduit comprising an inner diameter in 3 mm to 10 mm range, and a length below 50 cm, advantageously below 35 cm, more advantageously below 10 cm;
- at least one nozzle connected to an outlet of the at least one flow control valve by means of the at least outlet conduit, and intended to spray a cleaning fluid on a sensor to be cleaned when the at least one flow control valve is in the open state ;

Advantageously, the fluid distribution assembly can further comprise control means for controlling the actuator and the supply means;

The control means may be configured, when activated, to command the execution of at least one cleaning sequence of an initiation step and a termination step,
- the initiation step comprising the control of the actuator so that it imposes the open state to the at least one flow control valve, and the supply of the cleaning fluid at the predetermined pressure by the supply means;
- the termination step comprises the control of the actuator to impose a close state to the at least one flow control valve;
the initiation step and the termination step being spaced apart by a duration of less than a predetermined duration, said duration being advantageously below 250 ms, more advantageously below 200 ms, even more advantageously below 150 ms.

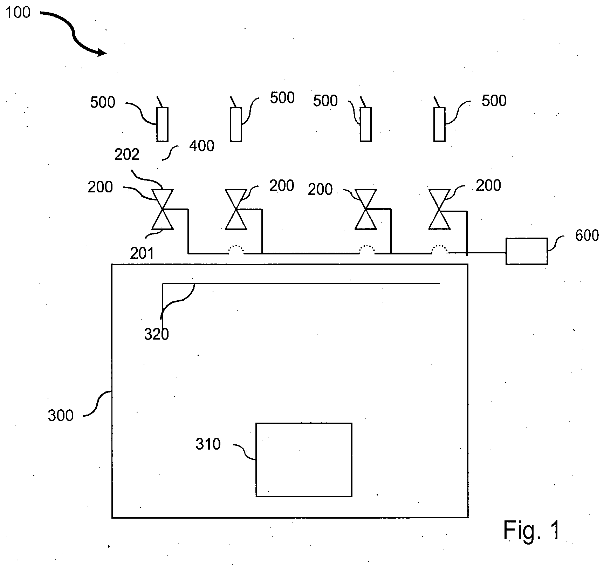

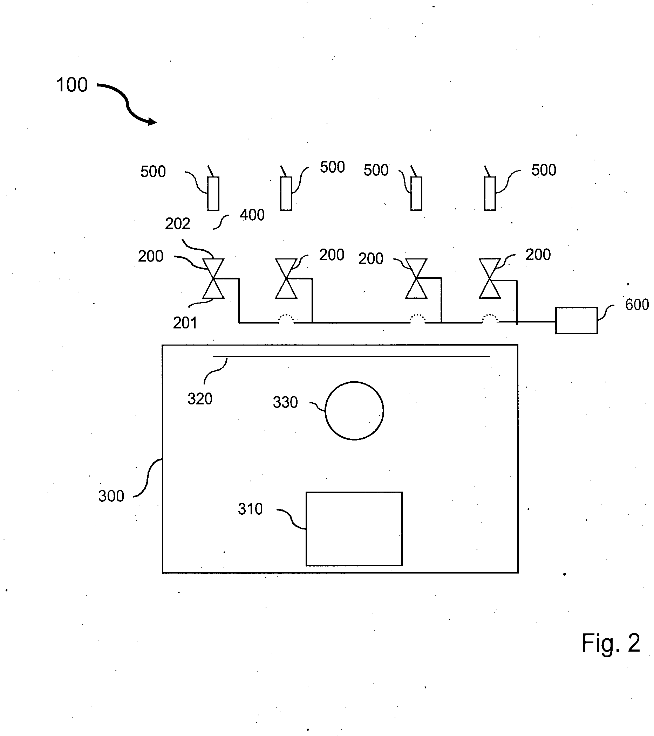

Fig. 1 and Fig. 2 are schematical representations of a fluid distribution assembly 100 according to, respectively, a first and a second embodiment of the present invention.

A fluid, according to the present invention, can comprise either a liquid or a gas.

The fluid distribution assembly 100 comprises at least one flow control valve 200, for example a plurality of flow control valves. The flow control valve 200 can be either in a close state and in an open state. In particulier, an open state, as opposed to a close state, is a state in which a fluid can flow through the valve, in a valve conduit, from the inlet to the outlet.

The flow control valve 200 comprises an actuator electronically controlled.

According to a first variant of both embodiments, the actuator can be configured to impose by default the close state to the flow control valve. In particular, as long as the actuator is not energized, the flow control valve remains in the close state.

According to the first variant, the flow control valve 200 can adopt the open state when the actuator is energized. In particular, the actuator may comprise a plunger terminated at one end by a pin, while the flow control valve may comprise a flexible membrane cooperating with the plunger. Notably, when the actuator is not energized, the plunger may exert an effort on the flexible membrane so that said membrane obturates the valve conduit. When the actuator is energized, the effort is released so that the flexible membrane can deform and let a fluid flowing from the inlet to the outlet of the at least one flow control valve. The supply of a cleaning fluid above a first pressure to the inlet 201 of the at least one flow control valve may ease the deformation of the flexible membrane.

An example of such a flow control valve 200 is described in the patent application EP 3 792 535. However, the skilled in the art can depart from this document and use any other valve operating according to the general principles described above.

The invention also concerns a second variant. The second variant differs from the first variant in that the actuator can be configured to impose by default the open state to the flow control valve. In particular, as long as the actuator is not energized, the flow control valve remains in the open state. According to the second variant, the flow control valve 200 can adopt the close state when the actuator is energized.

The fluid distribution assembly 100 comprises supply means 300 for supplying a cleaning fluid to the inlet 201 of the at least one flow control valve 200. Notably the supply means 300 are configured to supply the cleaning fluid at the inlet 201 at a pressure higher than a predetermined pressure, for example the predetermined pressure may be above the first pressure.

The supply means 300 can comprise a tank 310 for storing the cleaning fluid, and at least one intermediate conduit 320 connecting the tank and the at least one flow control valve.

The at least one intermediate conduit 320 can comprise a corrugated conduit or a smooth conduit. According to a first embodiment of the present invention illustrated in fig. 1, the tank 310 can be configured to store the cleaning fluid under pressure, and notably to maintain said cleaning fluid in the 1 bar to 15 bar pressure range, advantageously in the 2 bar to 15 bar pressure range, more advantageously in the 2 bar to 8 bar pressure range. This pressure may notably be adapted so that the cleaning fluid supply at the inlet 201 is above the first pressure. In other words, and according to this configuration, the sole control of the actuator of the at least one flow control valve triggers its switching to the open state.

According to the second embodiment illustrated in fig. 2, the supply means 300 can comprise a pump 330 interposed between the tank and the at least one flow control valve. Notably the pump 330 is configured to inject the cleaning fluid, from the tank 310, in the at least one flow control valve at a pressure is comprised in the 1 bar to 15 bar pressure range, advantageously in the 2 bar to 15 bar pressure range, more advantageously in the 2 bar to 8 bar pressure range. This pressure may notably be adapted so that the cleaning fluid supplied at the inlet 201 is above the first pressure.

The fluid distribution assembly 100 comprises at least one outlet conduit 400 comprising an inner diameter in 3 mm to 10 mm range, and a length below 50 cm, advantageously below 35 cm, more advantageously below 10 cm.

The outlet conduit 400 can comprise a corrugated conduit or a smooth conduit.

The fluid distribution assembly 100 also comprises at least one nozzle 500 connected to an outlet 202 of the at least one flow control valve 200 by means of the at least one outlet conduit 400. Notably, the at least one nozzle is intended to spray a cleaning fluid on a sensor to be cleaned when the at least one flow control valve 200 is in the open state.

In case a plurality of nozzles 500 is considered, each nozzle 500 is combined with a specific flow control valve which can be switched from one of the open state and the close state to the other of these states independently of the other flow control valves. The invention shall not be limited to this sole configuration and the combination of at least two nozzles with a specific flow control valve may be contemplated, notably when the surface sensor requires the implementation of more than one nozzle.

The at least one nozzle can comprise a jet/bowl nozzle, a fan spray nozzle, or an oscillating nozzle.

The at least one nozzle can be fix or telescopic.

The fluid distribution assembly 100 comprises control means 600 for controlling the actuator and the supply means. In particular, the control means 600 comprise a mother board, a central processing unit ("CPU") or other electronic device configured for commanding the execution of a computer program.

Notably, the control means 600 are configured to command the independent energizing/deenergizing of each flow control valve 200. To this regard, the control means 600 are configured, when activated, to command the execution of at least one cleaning sequence of an initiation step and a termination step.

The initiation step may comprise the control of the actuator of a specific flow control valve, and the supply of the cleaning fluid at the predetermined pressure by the supply means at the inlet of the considered flow control valve. Within the framework of the first variant, the initiation step involves the energizing of the actuator, while within the framework of the second variant said initiation step involves the withdrawal of energization of the actuator.

The termination step may comprise the control of the actuator of the considered flow control valve to impose a close state to said flow control valve. Within the framework of the first variant, the termination step involves the withdrawal of the energization of the actuator, while within the framework of the second variant said initiation step involves the energizing of the actuator.

Furthermore, the initiation step and the termination step are spaced apart by a duration of less than a predetermined duration. For example, the predetermined duration is below 250 ms, advantageously below 200 ms, and more advantageously below 150 ms.

Advantageously, the control means 600 are configured to command the execution of n successive cleaning sequences, n being an integer. In particular, n is chosen so that the ratio of the volume of the cleaning fluid sprayed over the surface on which the cleaning fluid is sprayed after n cleaning sequences is below 3 mL/cm², advantageously below 2 mL/cm², more advantageously below 1 mL/cm².

As an example, for a surface of 1550 mm², a ratio of 1 mL/cm² corresponds to 15 mL sprayed on said surface, a ratio of 2 mL/cm² corresponds to 30 mL sprayed on said surface, and a ratio of 3 mL/cm² corresponds to 45 mL sprayed on said surface.

The aforementioned configuration involving a quite short outlet conduit length is associated with a low pressure drop within said outlet conduit which results in an improvement of the cleaning performances with respect to an assembly equipped with a longer outlet conduit.

Furthermore, the control means configured for commanding the execution of cleaning sequences as described above, and in combination with short outlet conduit, allow also to improve the cleaning performances of said assembly with a relatively low consumption of cleaning fluid. The control means may also be configured so that further cleaning cycles may be requested if the surface is not clean enough after the execution of the cleaning sequences.

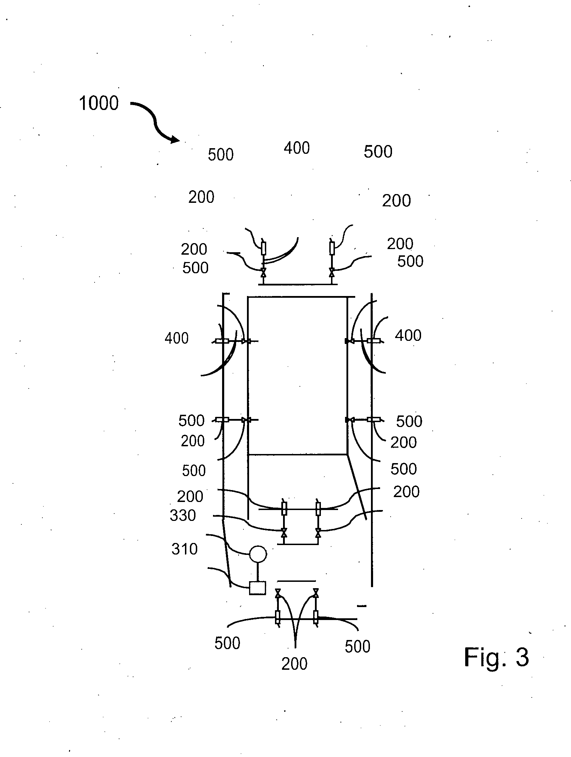

The invention also concerns an automotive vehicle 1000 (fig. 3) which comprises sensors and the fluid distribution assembly 100 according to the presented invention. The nozzles are arranged on the perimeter of the automotive vehicle and are configured to spray the cleaning fluid onto the sensors.

The invention also concerns a method for cleaning a sensor of an automotive vehicle 1000 by means of the fluid distribution assembly 100 mounted in said automotive vehicle 1000.

The method comprises the execution of at least one cleaning sequence of an initiation step and a termination step.

The initiation step comprises the control of the actuator of a specific flow control valve so that it imposes the open state to said flow control valve, and the supply of the cleaning fluid at the predetermined pressure by the supply means at the inlet of the considered flow control valve.

The termination step comprises the control of the actuator of the considered flow control valve to impose a close state to said flow control valve.

Furthermore, the initiation step and the termination step are spaced apart by a duration below a predetermined duration, for example the predetermined duration is below 250 ms, advantageously below 200 ms, more advantageously below 150 ms.

The at least one cleaning sequence can be commanded by the control means.

Advantageously, the method comprises the execution of n successive cleaning sequences, n being an integer. In particular, n is chosen so that the ratio of the volume of the cleaning fluid sprayed over the surface on which the cleaning fluid is sprayed after n cleaning sequences is below 3 mL/cm², advantageously below 2 mL/cm², more advantageously below 1 mL/cm².

As an example, for a surface of 1550 mm², a ratio of 1 mL/cm² corresponds to 15 mL sprayed on said surface, a ratio of 2 mL/cm² corresponds to 30 mL sprayed on said surface, and a ratio of 3 mL/cm² corresponds to 45 mL sprayed on said surface.

Advantageously, the predetermined pressure is comprised in the 1 bar to 15 bar pressure range, advantageously in the 2 bar to 15 bar pressure range, more advantageously in the 2 bar to 8 bar pressure range.

The inventors have demonstrated the cleaning process as described above and executed with the fluid distribution assembly of the present invention exhibit improved performances in terms of both cleaning efficiency and cleaning fluid consumption.

Notably, the inventors have measured to pressure profile at the nozzle outlet for at least two configurations said first and second configuration.

In particular, the first configuration is associated with a fluid distribution assembly (here after "First Assembly") devoid of flow control valve, while the second configuration corresponds to an assembly conform to the second embodiment of the present invention (hereafter "Second Assembly").

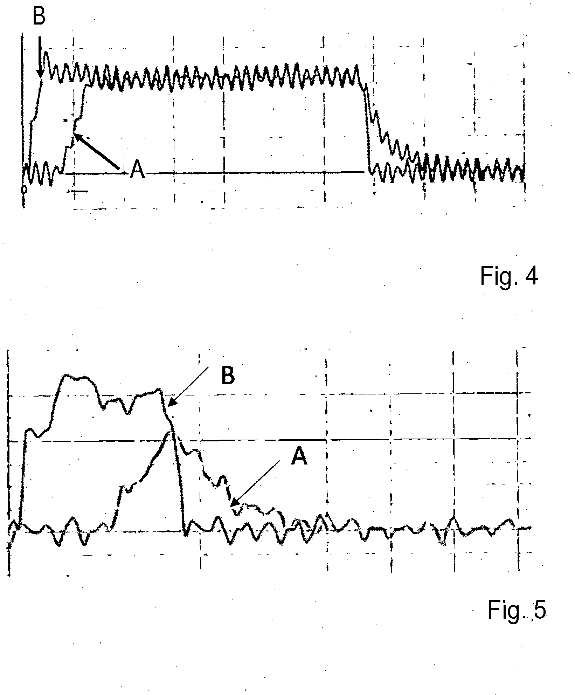

Examples of pressure profiles versus time are given in fig. 4 and in fig. 5. To this regard, the fig. 4 and the fig. 5 are a graphical representation of the pressure at the nozzle of the first assembly (curves A) and of the second assembly (curves B). As a general comment, the pressure building is delayed in the case of the First Assembly with respect to the Second Assembly. In other words, a steady state is reached in a faster way in the case of the Second Assembly which allows to consider shorter spray duration. Furthermore, and as depicted in fig. 5, the duration of the process is too short so that the steady state cannot be reached when the first assembly is considered.

Of course, the invention is not limited to the embodiments described and variant embodiments can be made without departing from the scope of the invention as defined by the claims.

## Claims

1. A fluid distribution assembly (100) for the cleaning of a sensor of a vehicle, the assembly comprising:
- at least one flow control valve (200) provided with an actuator which, when not energized, imposes one of an open state and a close state to the at least one control valve, and when energized imposes the other of the open state and the close state;
- supply means (300) for supplying a cleaning fluid to the inlet of the at least one flow control valve (200) at a pressure higher than a predetermined pressure;
- at least one outlet conduit (400) comprising an inner diameter in 3 mm to 10 mm range, and a length below 50 cm, advantageously below 35 cm, more advantageously below 10 cm;
- at least one nozzle (500) connected to an outlet of the at least one flow control valve (200) by means of the at least one outlet conduit (400) and intended to spray a cleaning fluid on a sensor to be cleaned when the at least one flow control valve (200) is in the open state, advantageously the at least one nozzle (500) is a jet nozzle, a telescopic nozzle, or an oscillating nozzle;
the at least one outlet conduit (400) is configured to impose a pressure drop below 1%.

2. The fluid distribution assembly, wherein said fluid distribution assembly further comprises control means (600) for controlling the actuator and the supply means (300), the control means (600) being configured, when activated, to command the execution of at least one cleaning sequence of an initiation step and a termination step,
- the initiation step comprises the control of the actuator so that it imposes the open state to the at least one flow control valve, and the supply of the cleaning fluid at the predetermined pressure by the supply means (300);
- the termination step comprises the control of the actuator so that it imposes the close state to the at least one flow control valve (200);
the initiation step and the termination step being spaced apart by a duration of less than a predetermined duration.

3. The fluid distribution assembly (100) according to claim 2, wherein the control means (600) are configured to command the execution of n successive cleaning sequences, n being an integer, and n being chosen so that the ratio of the volume of the cleaning fluid sprayed over the surface on which the cleaning fluid is sprayed is below 3 mL/cm², advantageously below 2 mL/cm², more advantageously below 1 mL/cm².

4. The fluid distribution assembly (100) according to any of claims 1 to 3, wherein the supply means (300) comprise a tank (310) for storing the cleaning fluid, and at least one intermediate conduit (320) connecting the tank (310) and the at least one flow control valve (200).

5. The fluid distribution assembly (100) according to claim 4, wherein the tank (310) is configured to maintain the cleaning fluid in the 1 bar to 15 bar pressure range, advantageously in the 2 bar to 15 bar pressure range, more advantageously in the 2 bar to 8 bar pressure range.

6. The fluid distribution assembly (100) according to claim 4, wherein supply means (300) further comprises a pump interposed between the tank (310) and the at least one flow valve, the pump being configured to inject the cleaning fluid, from the tank (310), in the at least one flow control valve (200) at a pressure comprised in the 1 bar to 15 bar pressure range, advantageously in the 2 bar to 15 bar pressure range, more advantageously in the 2 bar to 8 bar pressure range.

7. An automotive vehicle (1000) which comprises at least one sensor, the fluid distribution assembly (100) according to any of claims 1 to 6, the at least one nozzle (500) being arranged on the perimeter of the automotive vehicle and configured to spray the cleaning fluid onto the at least one sensor.

8. A method for cleaning a sensor of an automotive vehicle by means of a fluid distribution assembly (100), according to claims 1 to 6, mounted in said automotive vehicle which comprises:
the method comprising the execution of at least one cleaning sequence of an initiation step and a termination step,
- the initiation step comprising the control of the actuator so that it imposes the open state to the at least one flow control valve, and the supply of the cleaning fluid at the predetermined pressure by the supply means (300);
- the termination step comprises the control of the actuator so that it imposes the close state to the at least one flow control valve (200);
the initiation step and the termination step being spaced apart by a duration of less than a predetermined duration.

9. The method according to claim 8, wherein the fluid distribution assembly (100) further comprises control means (600) for controlling the actuator and the supply means (300), so that the execution of the at least one cleaning sequence is commanded by the control means (600).

10. The method according to claim 8 or 9, wherein the method comprises the execution of n successive cleaning sequences, n being an integer, and n being chosen so that the ratio of the volume of the cleaning fluid sprayed over the surface on which the cleaning fluid is sprayed is below 3 mL/cm², advantageously below 2 mL/cm², more advantageously below 1 mL/cm².

11. The method according to one of claim 8 to 10, wherein the predetermined pressure is in the 1 bar to 15 bar pressure range, advantageously in the 2 bar to 15 bar pressure range, more advantageously in the 2 bar to 8 bar pressure range.

12. The method according to one of claim 8 to 11, wherein the supply means (300) comprise a tank (310) storing the cleaning fluid, the tank (310) being located in the automotive vehicle and connected to an inlet of the at least one flow control valve (200) by means of an intermediate conduit (320).

13. The method according to claim 12, wherein the tank (310) maintains the cleaning fluid at a first pressure, the first pressure being adapted so that the cleaning fluid supplied to the at least one flow control valve (200) is at a pressure higher than the predetermined pressure.

14. The method according to claim 13, wherein the supply means (300) comprise a pump interposed between the tank (310) and the at least one control valve (200), the method comprises the activation of the pump for supplying the cleaning fluid to the inlet of the at least one flow control valve (200) at a pressure above the predetermined pressure.

## Patentansprüche

1. Flüssigkeitsverteilungsanordnung (100) zum Reinigen eines Sensors eines Fahrzeugs, wobei die Anordnung umfasst:
- mindestens ein Durchflussregelventil (200), das mit einem Aktuator versehen ist, der, wenn er nicht mit Strom versorgt wird, dem mindestens einen Regelventil einen geöffneten oder einen geschlossenen Zustand aufzwingt, und wenn er mit Strom versorgt wird ist, den anderen der beiden Zustände aufzwingt;
- Versorgungsmittel (300) zum Versorgen des Einlasses des mindestens einen Durchflussregelventils (200) mit einer Reinigungsflüssigkeit bei einem Druck, der höher als ein vorbestimmter Druck ist;
- mindestens eine Auslassleitung (400) mit einem Innendurchmesser im Bereich von 3 mm bis 10 mm und einer Länge von weniger als 50 cm, vorteilhafterweise weniger als 35 cm, noch vorteilhafter weniger als 10 cm;
- mindestens eine Düse (500), die mittels der mindestens einen Auslassleitung (400) mit einem Auslass des mindestens einen Durchflussregelventils (200) verbunden ist und dazu bestimmt ist, eine Reinigungsflüssigkeit auf einen zu reinigenden Sensor zu sprühen, wenn sich das mindestens eine Durchflussregelventil (200) im geöffneten Zustand befindet, wobei die mindestens eine Düse (500) vorteilhafterweise eine Strahldüse, eine Teleskopdüse oder eine oszillierende Düse ist;
die mindestens eine Auslassleitung (400) so konfiguriert ist, dass sie einen Druckabfall von weniger als 1 % aufzwingt.

2. Flüssigkeitsverteilungsanordnung, wobei die Flüssigkeitsverteilungsanordnung ferner Steuerungsmittel (600) zum Steuern des Aktuators und der Versorgungsmittel (300) umfasst, wobei die Steuerungsmittel (600) so konfiguriert sind, dass sie bei Aktivierung die Ausführung mindestens einer Reinigungssequenz aus einem Anfangsschritt und einem Beendigungsschritt anweisen,
- der Anfangsschritt umfasst, den Aktuator so zu steuern, dass er dem mindestens einen Durchflussregelventil den geöffneten Zustand und die Zufuhr der Reinigungsflüssigkeit mit dem vorbestimmten Druck durch die Versorgungsmittel (300) aufzwingt;
- der Beendigungsschritt umfasst, den Aktuator so zu steuern, dass er dem mindestens einen Durchflussregelventil (200) den geschlossenen Zustand aufzwingt;
wobei der Anfangsschritt und der Beendigungsschritt durch eine Dauer voneinander getrennt sind, die kürzer als eine vorbestimmte Dauer ist.

3. Flüssigkeitsverteilungsanordnung (100) nach Anspruch 2, wobei die Steuerungsmittel (600) dazu konfiguriert sind, die Ausführung von n aufeinanderfolgenden Reinigungssequenzen anzuweisen, wobei n eine ganze Zahl ist und n so gewählt ist, dass das Verhältnis des Volumens der versprühten Reinigungsflüssigkeit zu der Fläche, auf die die Reinigungsflüssigkeit gesprüht wird, unter 3 ml/cm², vorteilhafterweise unter 2 ml/cm², noch vorteilhafter unter 1 ml/cm² liegt.

4. Flüssigkeitsverteilungsanordnung (100) nach einem der Ansprüche 1 bis 3, wobei die Versorgungsmittel (300) einen Behälter (310) zum Aufbewahren der Reinigungsflüssigkeit und mindestens eine Zwischenleitung (320), die den Behälter (310) und das mindestens eine Durchflussregelventil (200) verbindet, umfassen.

5. Flüssigkeitsverteilungsanordnung (100) nach Anspruch 4, wobei der Behälter (310) dazu konfiguriert ist, die Reinigungsflüssigkeit im Druckbereich von 1 bar bis 15 bar, vorteilhafterweise im Druckbereich von 2 bar bis 15 bar, noch vorteilhafter im Druckbereich von 2 bar bis 8 bar zu halten.

6. Flüssigkeitsverteilungsanordnung (100) nach Anspruch 4, wobei die Versorgungsmittel (300) ferner eine Pumpe umfassen, die zwischen dem Behälter (310) und dem mindestens einen Durchflussregelventil angeordnet ist, wobei die Pumpe dazu konfiguriert ist, die Reinigungsflüssigkeit aus dem Behälter (310) in das mindestens eine Durchflussregelventil (200) bei einem Druck im Bereich von 1 bar bis 15 bar, vorteilhafterweise im Bereich von 2 bar bis 15 bar, noch vorteilhafter im Bereich von 2 bar bis 8 bar, einzuspritzen.

7. Kraftfahrzeug (1000), das mindestens einen Sensor umfasst, wobei die Flüssigkeitsverteilungsanordnung (100) nach einem der Ansprüche 1 bis 6, die mindestens eine Düse (500) am Umfang des Kraftfahrzeugs angeordnet und dazu konfiguriert ist, die Reinigungsflüssigkeit auf den mindestens einen Sensor zu sprühen.

8. Verfahren zum Reinigen eines Sensors eines Kraftfahrzeugs mittels einer Flüssigkeitsverteilungsanordnung (100) nach den Ansprüchen 1 bis 6, die in dem Kraftfahrzeug montiert ist, das umfasst:
das Verfahren, dass die Ausführung mindestens einer Reinigungssequenz aus einem Anfangsschritt und einem Beendigungsschritt umfasst,
- wobei der Anfangsschritt umfasst, den Aktuator so zu steuern, dass er dem mindestens einen Durchflussregelventil den geöffneten Zustand und die Zufuhr der Reinigungsflüssigkeit mit dem vorbestimmten Druck durch die Versorgungsmittel (300) aufzwingt;
- der Beendigungsschritt umfasst, den Aktuator so zu steuern, dass er dem mindestens einen Durchflussregelventil (200) den geschlossenen Zustand aufzwingt;
wobei der Anfangsschritt und der Beendigungsschritt durch eine Dauer voneinander getrennt sind, die kürzer als eine vorbestimmte Dauer ist.

9. Verfahren nach Anspruch 8, wobei die Flüssigkeitsverteilungsanordnung (100) ferner Steuerungsmittel (600) zum Steuern des Aktuators und der Versorgungsmittel (300) umfasst, so dass die Ausführung der mindestens einen Reinigungssequenz durch die Steuerungsmittel (600) gesteuert wird.

10. Verfahren nach Anspruch 8 oder 9, wobei das Verfahren die Ausführung von n aufeinanderfolgenden Reinigungssequenzen umfasst, wobei n eine ganze Zahl ist und n so gewählt wird, dass das Verhältnis des Volumens der versprühten Reinigungsflüssigkeit zu der Fläche, auf die die Reinigungsflüssigkeit gesprüht wird, unter 3 ml/cm², vorteilhafterweise unter 2 ml/cm², noch vorteilhafter unter 1 ml/cm² liegt.

11. Verfahren nach einem der Ansprüche 8 bis 10, wobei der vorbestimmte Druck im Druckbereich von 1 bar bis 15 bar, vorteilhafterweise im Druckbereich von 2 bar bis 15 bar, noch vorteilhafter im Druckbereich von 2 bar bis 8 bar liegt.

12. Verfahren nach einem der Ansprüche 8 bis 11, wobei die Versorgungsmittel (300) einen Behälter (310) umfassen, in dem die Reinigungsflüssigkeit aufbewahrt wird, wobei sich der Behälter (310) im Kraftfahrzeug befindet und mittels einer Zwischenleitung (320) mit einem Einlass des mindestens einen Durchflussregelventils (200) verbunden ist.

13. Verfahren nach Anspruch 12, wobei der Behälter (310) die Reinigungsflüssigkeit auf einem ersten Druck hält, wobei der erste Druck so angepasst wird, dass die dem mindestens einen Durchflussregelventil (200) zugeführte Reinigungsflüssigkeit auf einem Druck ist, der höher als der vorbestimmte Druck ist.

14. Verfahren nach Anspruch 13, wobei die Versorgungsmittel (300) eine Pumpe umfassen, die zwischen dem Behälter (310) und dem mindestens einen Regelventil (200) angeordnet ist, und das Verfahren die Aktivierung der Pumpe umfasst, um die Reinigungsflüssigkeit mit einem Druck über dem vorbestimmten Druck dem Einlass des mindestens einen Durchflussregelventils (200) zuzuführen.

## Revendications

1. Ensemble de distribution de fluide (100) pour le nettoyage d'un capteur d'un véhicule, l'ensemble comprenant :
- au moins une vanne de commande de débit (200) munie d'un actionneur qui, lorsqu'il n'est pas excité, impose l'un ou l'autre d'un état d'ouverture et d'un état de fermeture à l'au moins une vanne de commande, et qui, lorsqu'il est excité, impose l'autre état parmi l'état d'ouverture et l'état de fermeture ;
- un moyen d'alimentation (300) permettant de fournir un fluide de nettoyage à l'entrée de l'au moins une vanne de commande de débit (200) à une pression supérieure à une pression prédéterminée ;
- au moins un conduit de sortie (400) comprenant un diamètre intérieur dans la plage de 3 mm à 10 mm, et une longueur inférieure à 50 cm, avantageusement inférieure à 35 cm, plus avantageusement inférieure à 10 cm ;
- au moins une buse (500) reliée à une sortie de l'au moins une vanne de commande de débit (200) au moyen de l'au moins un conduit de sortie (400) et destinée à pulvériser un fluide de nettoyage sur un capteur à nettoyer lorsque l'au moins une vanne de commande de débit (200) est à l'état d'ouverture, avantageusement l'au moins une buse (500) est une buse à jet, une buse télescopique, ou une buse oscillante ;
l'au moins un conduit de sortie (400) est conçu pour imposer une chute de pression inférieure à 1 %.

2. Ensemble de distribution de fluide, dans lequel ledit ensemble de distribution de fluide comprend en outre un moyen de commande (600) permettant de commander l'actionneur et le moyen d'alimentation (300), le moyen de commande (600) étant configuré, lorsqu'il est activé, pour commander l'exécution d'au moins une séquence de nettoyage constituée d'une étape d'initiation et d'une étape de fin,
- l'étape d'initiation comprend la commande de l'actionneur de sorte qu'il impose l'état d'ouverture à l'au moins une vanne de commande de débit, et la fourniture du fluide de nettoyage à la pression prédéterminée par le moyen d'alimentation (300) ;
- l'étape de fin comprend la commande de l'actionneur de sorte qu'il impose l'état de fermeture à l'au moins une vanne de commande de débit (200) ;
l'étape d'initiation et l'étape de fin étant séparées par une durée inférieure à une durée prédéterminée.

3. Ensemble de distribution de fluide (100) selon la revendication 2, dans lequel le moyen de commande (600) est configuré pour commander l'exécution de n séquences de nettoyage successives, n étant un nombre entier, et n étant choisi de sorte que le rapport du volume de fluide de nettoyage pulvérisé à la surface sur laquelle le fluide de nettoyage est pulvérisé soit inférieur à 3 mL/cm², avantageusement inférieur à 2 mL/cm², plus avantageusement inférieur à 1 mL/cm².

4. Ensemble de distribution de fluide (100) selon l'une quelconque des revendications 1 à 3, dans lequel le moyen d'alimentation (300) comprend un réservoir (310) permettant de stocker le fluide de nettoyage, et au moins un conduit intermédiaire (320) reliant le réservoir (310) et l'au moins une vanne de commande de débit (200).

5. Ensemble de distribution de fluide (100) selon la revendication 4, dans lequel le réservoir (310) est configuré pour maintenir le fluide de nettoyage dans la plage de pression de 1 bar à 15 bar, avantageusement dans la plage de pression de 2 bar à 15 bar, plus avantageusement dans la plage de pression de 2 bar à 8 bar.

6. Ensemble de distribution de fluide (100) selon la revendication 4, dans lequel le moyen d'alimentation (300) comprend en outre une pompe intercalée entre le réservoir (310) et l'au moins une vanne de débit, la pompe étant conçue pour injecter le fluide de nettoyage, à partir du réservoir (310), dans l'au moins une vanne de commande de débit (200) à une pression comprise dans la plage de pression de 1 bar à 15 bar, avantageusement dans la plage de pression de 2 bar à 15 bar, plus avantageusement dans la plage de pression de 2 bar à 8 bar.

7. Véhicule automobile (1000) qui comprend au moins un capteur, l'ensemble de distribution de fluide (100) selon l'une quelconque des revendications 1 à 6, l'au moins une buse (500) étant disposée sur le périmètre du véhicule automobile et conçue pour pulvériser le fluide de nettoyage sur l'au moins un capteur.

8. Procédé de nettoyage d'un capteur d'un véhicule automobile au moyen d'un ensemble de distribution de fluide (100), selon les revendications 1 à 6, monté dans ledit véhicule automobile, qui comprend :
le procédé comprenant l'exécution d'au moins une séquence de nettoyage constituée d'une étape d'initiation et d'une étape de fin,
- l'étape d'initiation comprenant la commande de l'actionneur de sorte qu'il impose l'état d'ouverture à l'au moins une vanne de commande de débit, et la fourniture du fluide de nettoyage à la pression prédéterminée par le moyen d'alimentation (300) ;
- l'étape de fin comprend la commande de l'actionneur de sorte qu'il impose l'état de fermeture à l'au moins une vanne de commande de débit (200) ;
l'étape d'initiation et l'étape de fin étant séparées par une durée inférieure à une durée prédéterminée.

9. Procédé selon la revendication 8, dans lequel l'ensemble de distribution de fluide (100) comprend en outre un moyen de commande (600) permettant de commander l'actionneur et le moyen d'alimentation (300), de sorte que l'exécution de l'au moins une séquence de nettoyage est commandée par le moyen de commande (600).

10. Procédé selon la revendication 8 ou 9, dans lequel le procédé comprend l'exécution de n séquences de nettoyage successives, n étant un nombre entier, et n étant choisi de sorte que le rapport du volume de fluide de nettoyage pulvérisé à la surface sur laquelle le fluide de nettoyage est pulvérisé soit inférieur à 3 mL/cm², avantageusement inférieur à 2 mL/cm², plus avantageusement inférieur à 1 mL/cm².

11. Procédé selon l'une des revendications 8 à 10, dans lequel la pression prédéterminée est dans la plage de pression de 1 bar à 15 bar, avantageusement dans la plage de pression de 2 bar à 15 bar, plus avantageusement dans la plage de pression de 2 bar à 8 bar.

12. Procédé selon l'une des revendications 8 à 11, dans lequel le moyen d'alimentation (300) comprend un réservoir (310) stockant le fluide de nettoyage, le réservoir (310) étant situé dans le véhicule automobile et relié à une entrée de l'au moins une vanne de commande de débit (200) au moyen d'un conduit intermédiaire (320).

13. Procédé selon la revendication 12, dans lequel le réservoir (310) maintient le fluide de nettoyage à une première pression, la première pression étant adaptée de sorte que le fluide de nettoyage fourni à l'au moins une vanne de commande de débit (200) soit à une pression supérieure à la pression prédéterminée.

14. Procédé selon la revendication 13, dans lequel le moyen d'alimentation (300) comprend une pompe intercalée entre le réservoir (310) et l'au moins une vanne de commande (200), le procédé comprend l'activation de la pompe afin de fournir le fluide de nettoyage à l'entrée de l'au moins une vanne de commande de débit (200) à une pression supérieure à la pression prédéterminée.
